# EUROPÄISCHE PATENTSCHRIFT

(11) **EP 0 892 178 B1**
(45) Veröffentlichungstag und Bekanntmachung des Hinweises auf die Patenterteilung: **09.10.2002**
(21) Anmeldenummer: 98112012.4
(22) Anmeldetag: 30.06.1998
(51) Int. Cl.: F16B 5/02, F16B 41/00

(54) **Verschlusseinrichtung**
Connecting device
Organe de verrouillage

(30) Priorität: 18.07.1997 DE 19731038
(43) Veröffentlichungstag der Anmeldung: 20.01.1999
(73) Patentinhaber: Fairchild Fasteners Europe - Camloc GmbH, 65779 Kelkheim (DE)
(72) Erfinder: Jüling, Dieter, Dipl.-Ing., 61389 Schmitten (DE); Stölken, Jochen, Dipl.-Ing., 65719 Hofheim (DE)
(74) Vertreter: KEIL & SCHAAFHAUSEN

(56) Entgegenhaltungen:
- EP-A- 0 480 866
- DE-A- 2 142 488
- DE-A- 2 243 661
- DE-A- 3 729 423
- DE-A- 3 734 735
- DE-C- 4 032 594

## Beschreibung

Die Erfindung bezieht sich auf eine Verschlußeinrichtung zum Verbinden zweier zum Beispiel jedenfalls bereichsweise plattenförmiger Bauteile mit einem an dem ersten Bauteil ggf. unverlierbar sicherbaren verschlußzapfen und einem an der Rückseite des zweiten Bauteils anordenbaren Aufnahmeelement, bei welcher der Verschlußzapfen einen für die Abstützung an der Vorderseite des ersten Bauteils ausgebildeten Kopfabschnitt und einen durch eine Öffnung einer in einer Öffnung des ersten Bauteils angeordenten Führungshülse hindurchführbaren Schaftabschnitt aufweist, welcher ein mit einem Gegengewinde eines Verbindungsabschnitts des Aufnahmeelements zusammenwirkendes Gewinde aufweist, bei welcher die Führungshülse an dem dem Kopfabschnitt des Verschlußzapfens zugeordneten Ende einen radial erweiterten Kopfabschnitt und an dem dem Kopfabschnitt des Verschlußzapfens abgewandten Ende einen radial erweiterbaren kragenartigen Befestigungsabschnitt aufweist, welcher randum nach außen weggebogen ist.

Derartige Verschlußeinrichtungen, wie sie beispielsweise aus der DE 40 32 594 C2 bekannt sind, dienen u.a. als Deckelverschlüsse im Flugzeugbau. Die Paneele oder dergleichen Bauteile, in welchen derartige Verschlußeinrichtungen mit ihrer Führungshülse gehalten werden sollen, bestehen beispielsweise aus Kohlefasern oder dergleichen wenig widerstandsfähigen Verbundmaterialien, welche die Festlegung der Verschlußeinrichtung insbesondere bei verhältnismäßig dünnen Bauteilen wegen der einwirkenden Scherkräfte problematisch machen.

Aus der DE-OS 22 43 661 ist eine Verschlußeinrichtung der eingangs genannten Art bekannt. Problematisch bei dem dortigen Beschlag ist der Umstand, dass das Umbördeln der Befestigungsabschnitte der Führungshülse leicht zu einer Delaminierung von wenig widerstandsfähigem Material, wie beispielsweise Kohlefaser/Kunststoff-Platten führt.

Aufgabe der vorliegenden Erfindung ist es, eine Verschlußeinrichtung der eingangs genannten Art so zu verbessern, daß bei möglichst niedriger Bauhöhe und möglichst geringem Außendurchmesser die Dauerfestigkeit ihrer Lagerung in dem ersten Bauteil bei Scherbeanspruchung wesentlich erhöht ist.

Diese Aufgabe wird erfindungsgemäß bei einer Verschlußeinrichtung der eingangs genannten Art beispielsweise einfach dadurch gelöst, daß die Führungshülse im Bereich des Scherspaltes zwischen dem ersten Bauteil und dem zweiten Bauteil den Schaftabschnitt des Verschlußzapfens spielfrei bzw. im wesentlichen spielfrei umgibt und dass der Befestigungsabschnitt auf eine an dem die Führungshülse umgebenden Rand der Rückseite des ersten Bauteils anliegende Unterlegscheibe nach außen weggebogen ist, wobei die Unterlegscheibe als flache im Querschnitt im wesentlichen rechteckige Ringscheibe ausgebildet ist und die Führungshülse spielfrei bzw. im wesentlichen spielfrei umgibt. Die flache Unterlegscheibe gewährleistet eine Verteilung der Bördelkräfte, so daß die Flächenbelastung des Materials des ersten Bauteils im Bereich des seine Öffnung umgebenden Randes begrenzt ist, was insbesondere bei dem häufig eingesetzten, zum Delaminieren neigenden Kohlefaserwerkstoff von besonderem Vorteil ist, und zwar dies bei Erhöhung der Übertragbarkeit von Scherkräften und bei geringer Bauhöhe.

Es hat sich überraschenderweise herausgestellt, daß bei Verwirklichung dieser Merkmale die Lebensdauer der Befestigung der Verschlußeinrichtung bei Scherbeanspruchung trotz geringer Bauhöhe und geringem Außendurchmesser gegenüber den bekannten Verschlußeinrichtungen nahezu verdoppelt werden kann.

Die Scherfestigkeit kann noch weiter verbessert werden, wenn gemäß einer besonderen Ausgestaltung der Erfindung zwischen der rückseitigen Stirnfläche der Führungshülse und dem Befestigungsabschnitt ein ringförmiger Einstich vorgesehen ist. Auf diese Weise ist es möglich, was insbesondere bei Verwendung von Faserverbundstoffen mit hohen Toleranzen in der Dicke von Interesse ist, erhebliche Toleranzen auszugleichen, und zwar ohne Beeinträchtigung der Bördelfähigkeit des Befestigungsabschnitts und auch bei geringen Dicken des ersten Bauteils. Der kragenartige Befestigungsabschnitt überragt nach seiner Abbiegung beispielsweise mittels eines Werkzeuges nach radial außen den Vollmaterialbereich der Führungshülse auf der Rückseite des ersten Bauteils nicht oder nicht nennenswert.

Von besonderem Vorteil ist dabei, daß, wenn der Verschlußzapfen in an sich bekannter Weise als Hohlzapfen ausgebildet ist, der Schaftabschnitt jedenfalls im Bereich des Scherspalts als Vollschaft ausgebildet ist. Auf diese Weise wird durch einen möglichst großen Traganteil der Zylinderkontur des Verschlußzapfens die Übertragung möglichst hoher Scherkräfte realisiert. Durch Abstimmung der Antriebstiefe zur Tiefe der Gewindebohrung kann bei maximaler Anforderung an Antriebszyklus und an Gewindeüberdeckung bei minimaler Plattenstärke maximale Scherbeanspruchung gewährleistet werden. Das Verschlußelement übernimmt somit innerhalb des Flugzeugaufbaus festigkeitsbestimmende Funktionen als strukturelles Verschlußelement.

Eine noch weitere Steigerung der Scherfestigkeit kann dadurch erreicht werden, daß der Befestigungsabschnitt in einer Ebene senkrecht zu der Achse der Führungshülse radial nach außen abgewinkelt ist und vollflächig in der senkrecht zu der Achse der Führungshülse liegenden Ebene an der flachen Unterleg- scheibe anliegt. Aufgrund der Umbördelung des Befestigungsabschnitts um 90° kann ein minimaler Abstand zwischen dem ersten und dem zweiten Bauteil eingehalten werden.

Um eine möglichst flache Bördelung des Befestigungsabschnitts ohne dessen Beschädigung zu erreichen, kann die Unterlegscheibe an ihrer rückwärtigen Innenkante, also an derjenigen Kante, um welche der Befestigungsabschnitt nach außen umgebördelt wird, mit einem Radius versehen sein. Hierdurch wird auch ein Auffedern des Befestigungsabschnitts verhindert.

Besteht das erste Bauteil aus einem stabileren Material, wie Aluminium, so ist die Verwendung einer Unterlegscheibe, wie sie z.B. für Faserverbundmaterialien von Vorteil ist, nicht unbedingt notwendig. Für diesen Fall kann der Befestigungsabschnitt um einen Winkel von mehr als 90° in eine Ansenkung in dem die Führungshülse umgebenden Rand der Rückseite des ersten Bauteils nach außen umgebördelt sein, um hierdurch die Übertragbarkeit von Scherkräften weiter zu begünstigen.

Besonders vorteilhafte Verhältnisse hinsichtlich geringer Bauhöhe und Übertragbarkeit von Scherkräften ergeben sich dann, wenn die rückseitige Fläche des nach außen abgewinkelten Befestigungsabschnitts mit der rückseitigen Stirnfläche der Führungshülse fluchtet oder im wesentlichen fluchtet.

Der Befestigungsabschnitt hat zweckmäßigerweise eine Wandstärke zwischen 0,1 und 0,3 mm, vorzugsweise von etwa 0,2 mm.

Die Unterlegscheibe sollte eine Materialstärke zwischen 0,2 und 0,5 mm, vorzugsweise von etwa 0,35 mm, haben.

Eine einfache Zentrierung von Verschlußzapfen und/oder Führungshülse erhält man dann, wenn der Kopfabschnitt des Verschlußzapfens und/oder der Kopfabschnitt der Führungshülse als außen konischer Senkkopf ausgebildet sind/ist, wobei die Öffnung in dem ersten Bauteil und/oder die Öffnung in der Führungshülse vorderseitig eine entsprechende konische Einsenkung aufweisen/aufweist.

Der Konuswinkel des Senkkopfes des Verschlußzapfens und/oder der Führungshülse liegen/liegt dabei vorzugsweise zwischen 90 und 110°, insbesondere bei etwa 100°.

Bei einer weiteren Ausgestaltung der Erfindung weist der Verschlußzapfen an seiner Umfangsfläche eine dem Kopfabschnitt zugewandte Anschlagfläche auf, welche zum Verhindern des vollständigen Herausziehens des Verschlußzapfens aus der Öffnung der Führungshülse mit einem Sicherungsring zusammenwirkt, welcher in einer zu der Öffnung der Führungshülse hin offenen ringnutartigen Aussparung angeordnet ist. Der Verschlußzapfen ist damit nach der Montage der Verschlußeinrichtung verliersicher in der Führungshülse gehalten.

Dabei ist der Sicherungsring bevorzugt radial nach innen derart vorgespannt, daß er beim axialen Verschieben des Verschlußzapfens seine Vorspannung behält und damit der Verschlußzapfen in beliebiger Position stehen bleibt, andererseits aber auch mit hohen Kräften nicht aus der Führungshülse herausgezogen werden kann.

Mit Hilfe der geschilderten Verliersicherung ist es aber auch möglich, den verschlußzapfen und die Führungshülse als vormontierte Baueinheit auszubilden und diese als solche vor dem Umbördeln des Befestigungsabschnitts in die Öffnung des ersten Bauteils einzusetzen. Auf diese Weise kann sich ein Werkzeug für das Umbördeln des Befestigungsabschnitts an dem Verschlußzapfen abstützen. Dies geschieht beispielsweise dadurch, daß das Werkzeug einen Gewindezapfen hat, welcher in das Innengewinde des hohlzylindrischen Teils des Verschlußzapfens einschraubbar ist, welches später zur Aufnahme eines Verbindungsabschnittes des Aufnahmeelements der Verschlußeinrichtung dient.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung.

Es zeigen:
- Fig. 1: teilweise geschnitten Führungshülse und Verschlußzapfen einer die Erfindung aufweisenden Verschlußeinrichtung in Seitenansicht,
- Fig. 2: teilweise geschnitten in Seitenansicht eine Unterlegscheibe für eine erfindungsgemäße Verschlußeinrichtung,
- Fig. 3: ebenfalls teilweise geschnitten in Seitenansicht eine die Erfindung aufweisende Verschlußeinrichtung in geschlossener Lage an einem ersten Bauteil, und
- Fig. 4: einen Schnitt eines ersten Bauteils im Bereich der Öffnung mit einer rückseitigen Einsenkung.

Die in den Figuren dargestellte Verschlußeinrichtung besteht im wesentlichen aus einem an dem ersten Bauteil 2 unverlierbar sicherbaren Verschlußzapfen 4 und einem an der Rückseite des in diesem Fall rahmenartig ausgebildeten zweiten Bauteils 3 anordenbaren gehäuseartigen Aufnahmeelement 6, welches mittels eines Käfigs 7 auf der Rückseite des zweiten Bauteil 3 montierbar ist. Der Verschlußzapfen 4 weist einen für die Abstützung an der Vorderseite 8 des ersten Bauteils 2 als Senkkopf ausgebildeten Kopfabschnitt 10 auf, welcher in eine entsprechende Einsenkung einer Führungshülse 16 paßt, sowie einen durch eine Öffnung 12 der Führungshülse 16 hindurchführbaren Schaftabschnitt 18.

Die Führungshülse 16 ist in eine Öffnung 14 des ersten Bauteils 2 eingefügt und weist ebenfalls einen als konischen Senkkopf ausgebildeten Kopfabschnitt 32 auf, welcher in eine entsprechende vorderseitige Einsenkung im Rand der Öffnung 14 des ersten Bauteils 2 paßt.

Der Schaftabschnitt 18 des Verschlußzapfens 4 ist teilweise hohlzylindrisch ausgebildet und trägt innen ein Gewinde 24, welches mit einem äußeren Gegengewinde 20 eines Verbindungsabschnitts 22 des Aufnahmeelements 6 zusammenwirkt. Zur Betätigung mittels eines Drehwerkzeuges ist der Kopfabschnitt 10 des Verschlußzapfens 4 mit einem Flügelkreuzschlitz 44 ausgestattet. Beim Verschrauben des Verschlußzapfens 4 mit dem Aufnahmeelement 6 stützt sich der Schaftabschnitt 18 mit seiner rückseitigen Stirnfläche 50 auf einem Federpaket 52 in dem Aufnahmelement 6 ab.

Der Verschlußzapfen 4 kann mit seinem Schaftabschnitt 18 in die Öffnung 12 der Führungshülse 16 zunächst nur so weit eingeführt werden, bis er mit einem mit einer Anfasung 46 versehenen Anschlagrand 48 an einem in einer ringnutartigen Aussparung 30 der Öffnung 12 der Führungshülse 16 vorgesehenen, als Spannring mit im wesentlichen rechteckigem flachen Querschnitt ausgebildeten Sicherungsring 28 anliegt. Beim weiteren Eindrücken des Schaftabschnitts 18 in die Führungshülse 16 wird der Sicherungsring 28 entgegen seiner nach innen gerichteten Federvorspannung aufgeweitet und dabei tiefer nach außen in die Aussparung 30 gedrückt, bis der wulstartige Anschlagrand 48 an dem Sicherungsring 28 vorbeigeglitten ist. Die Federvorspannung ist so bemessen, daß der Verschlußzapfen 4 in jeder axialen Stellung stehen bleibt. Auf der der Anfasung 46 gegenüberliegenden Seite weist der Anschlagrand 48 eine ringförmige Anschlagfläche 26 auf, welche beim Herausziehen des verschlußzapfens 4 aus der Führungshülse 16 an den Sicherungsring 28 anschlägt. Auf diese Weise ist der Verschlußzapfen 4 unverlierbar an dem ersten Bauteil 2 gehalten. Die Verliersicherung kann auch dazu dienen, den Verschlußzapfen 4 und die Führungshülse 16 als vormontierte Baueinheit in die Öffnung 14 des ersten Bauteils 2 einzusetzen, bevor ein am rückseitigen Ende der Führungshülse vorgesehener Befestigungsabschnitt 34 nach außen umgebördelt ist.

Die Führungshülse 16 hat, wie zuvor erwähnt, an ihrem dem Kopfabschnitt 10 des Verschlußzapfens 16 abgewandten Ende einen radial erweiterbaren kragenartigen Befestigungsabschnitt 34 verhältnismäßig geringer Wandstärke, welcher zunächst im wesentlichen zylindrisch ist und bei der Montage ggf. unter Zwischenlage einer Unterlegscheibe 36 mit Hilfe eines Verformungswerkzeuges rundum nach außen weggebogen wird. Das Umbördelwerzeug kann dabei mit einem Gewindezapfen in das Innengewinde 24 des Schaftabschnitts 18 eingreifen.

Die Führungshülse 16 umfaßt den Schaftabschnitt 18 des Verschlußzapfens 4 im Bereich des Scherspaltes S zwischen dem ersten Bauteil 2 und dem zweiten Bauteil 3 spielfrei bzw. im wesentlichen spielfrei, und zwar in einem Bereich des ansonsten als Hohlzapfen ausgebildeten Verschlußzapfens 4, in welchem dieser zwischen dem Flügelkreuzschlitz 44 und der Gewindebohrung 54 des hohlzylindrischen Teils des Schaffabschnitts 18 als Vollschaft ausgebildet ist. Antriebstiefe des Flügelkreuzschlitzes 44 und Tiefe der Gewindebohrung 54 sind bei maximaler Forderung an Antriebszyklen und maximaler Forderung an Gewindeüberdeckung so aufeinander abgestimmt, daß bei minimaler Stärke des ersten Bauteils 2 aufgrund des verbleibenden Vollschaftabschnitts maximale Scherbeanspruchung gewährleistet ist.

Die Führungshülse 16, welche etwas dicker ist als das erste Bauteil 2 weist zwischen ihrer rückseitigen Stirnfläche 40 und dem Befestigungsabschnitt 34 einen ringförmigen Einstich 42 auf, so daß der Befestigungsabschnitt 34, welcher in einer Ebene E senkrecht zu der Achse A der Führungshülse 16 radial nach außen abgewinkelt ist, trotz des formschlüssigen Übergreifens der Unterlegscheibe 36 unter Berücksichtigung von Toleranzen in der Materialstärke des ersten Bauteils 2 die Stirnfläche 40 der Führungshülse 16 nicht nennenswert überragt.

Die Unterlegscheibe 36 ist als flache im Querschnitt im wesentlichen rechteckige Ringscheibe ausgebildet und umgibt die Führungshülse 16 spielfrei bzw. im wesentlichen spielfrei. Der Befestigungsabschnitt 34 liegt in der Ebene E senkrecht zu der Achse A der Führungshülse 16 vollfächig an der flachen Unterlegscheibe 36 an, so daß übermäßige Druckkräfte auf dem Rand des ersten Bauteils 2 vermieden werden.

Der Befestigungsabschnitt 34 kann eine Wandstärke zwischen 0,1 und 3 mm, die Unterlegscheibe 36 eine Materialstärke D zwischen 0,2 und 0,5 mm haben, so daß einerseits gewährleistet ist, daß der Befestigungsabschnitt 34 die Unterlegscheibe 36, welche an ihrer rückseitigen Innenkante mit einem Radius R abgerundet ist, formschlüssig umgreifend, bei der Montage mittels eines Werkzeuges nach außen umgelegt werden kann, andererseits aber die erforderliche Scher- und Zugfestigkeit gewährleistet ist.

Besteht das erste Bauteil 2 nicht aus einem Material, welches zur Delamination neigt, sondern aus einem stabilen Material, wie Aluminium, so ist eine Unterlegscheibe 36 entbehrlich. In diesem Fall kann der Befestigungsabschnitt 34 vielmehr um einen Winkel von mehr als 90° in eine Ansenkung in dem die Führungshülse 16 umgebenden Rand der Rückseite 38 des ersten Bauteils 2 nach außen umgebördelt sein, um die Aufnahme von Scherkräften zu verbessern.

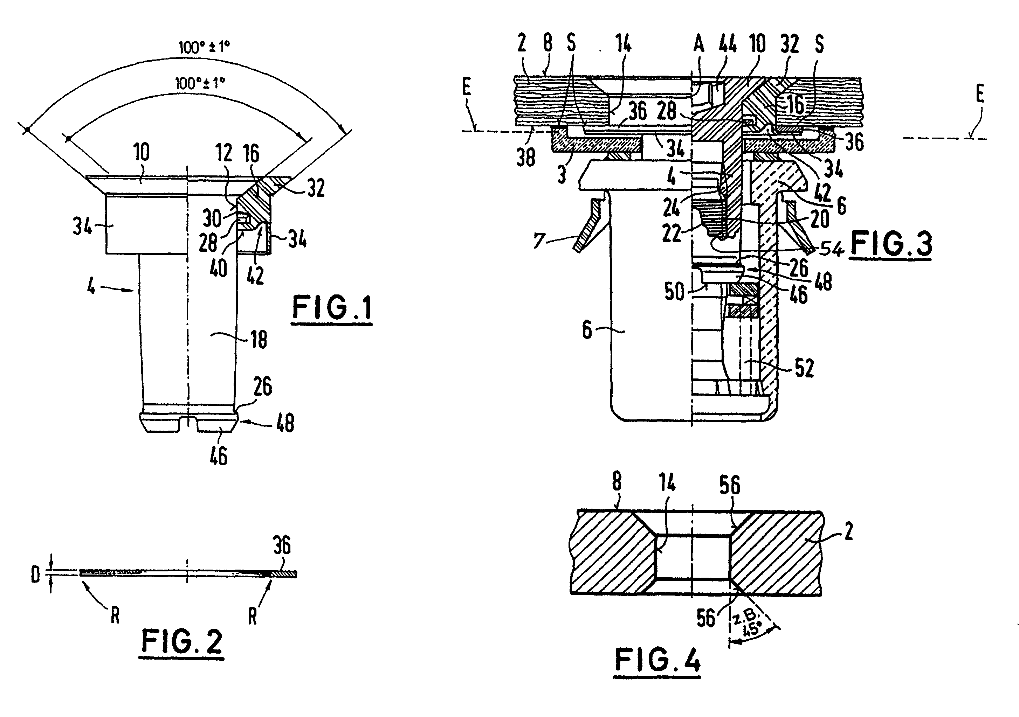

Figur 4 veranschaulicht einen Schnitt eines ersten Bauteils 2 im Bereich der Öffnung 14, welche in diesem Fall auch eine rückseitige Einsenkung 56 aufweist, innerhalb welcher der Befestigungsabschnitt 34 weniger als 90° umgebördelt sein kann. Eine solche Ausführung eignet sich für Bauteile 2 aus einem nicht-delaminierenden Material, wie Aluminium.

### Bezugszeichenliste:

- 2: erstes Bauteil
- 3: zweites Bauteil
- 4: Verschlußzapfen
- 6: Aufnahmeelement
- 7: Käfig
- 8: Vorderseite des ersten Bauteils
- 10: Kopfabschnitt des Verschlußzapfens
- 12: Öffnung der Führungshülse
- 14: Öffnung des ersten Bauteils
- 16: Führungshülse
- 18: Schaftabschnitt
- 20: Gegengewinde
- 22: Verbindungsabschnitt
- 24: Gewinde
- 26: Anschlagfläche
- 28: Sicherungsring
- 30: Aussparung
- 32: Kopfabschnitt der Führungshülse
- 34: Befestigungsabschnitt
- 36: Unterlagscheibe
- 38: Rückseite des ersten Bauteils
- 40: rückseitige Stirnfläche der Führungshülse
- 42: Einstich
- 44: Flügelkreuzschlitz
- 46: Anfasung
- 48: Anschlagrand
- 50: Stirnfläche
- 52: Federpaket
- 54: Gewindebohrung
- 56: Einsenkung

- A: Achse der Führungshülse
- D: Materialstärke der Unterlegscheibe
- E: Ebene
- R: Radius
- S: Scherspalt

## Patentansprüche

1. Verschlußeinrichtung zum Verbinden zweier zum Beispiel jedenfalls bereichsweise plattenförmiger Bauteile (2, 3), mit einem an dem ersten Bauteil (2) ggf. unverlierbar sicherbaren Verschlußzapfen (4) und einem an der Rückseite des zweiten Bauteils (3) anordenbaren Aufnahmeelement (6), bei welcher der Verschlußzapfen (4) einen für die Abstützung an der Vorderseite (8) des ersten Bauteils (2) ausgebildeten Kopfabschnitt (10) und einen durch eine Öffnung (12) einer in einer Öffnung (14) des ersten Bauteils (2) angeordneten Führungshülse (16) hindurchführbaren Schaftabschnitt (18) aufweist, welcher ein mit einem Gegengewinde (20) eines Verbindungsabschnitts (22) des Aufnahmeelements (6) zusammenwirkendes Gewinde (24) aufweist, bei welcher die Führungshülse (16) an dem dem Kopfabschnitt (10) des Verschlußzapfens (4) zugeordneten Ende einen radial erweiterten Kopfabschnitt (32) und an dem dem Kopfabschnitt (10) des Verschlußzapfens (4) abgewandten Ende einen radial erweiterbaren kragenartigen Befestigungsabschnitt (34) aufweist, welcher rundum nach außen weggebogen ist, **dadurch gekennzeichnet, daß** die Führungshülse (16) den Schaftabschnitt (18) des Verschlußzapfens (4) im Bereich des Scherspaltes (S) zwischen dem ersten Bauteil (2) und dem zweiten Bauteil (3) spielfrei bzw. in Wesentlichen spielfrei umfasst, daß der Befestigungsabschnitt (34) auf eine an dem die Führunghülse (16) umgebenden Rand der Rückseite (38) des ersten Bauteils (2) anliegenden Unterlegscheibe (36) nach außen weggebogen ist, und daß die Unterlegscheibe (36) als flache im Querschnitt im wesentlichen rechteckige Ringscheibe ausgebildet ist und die Führungshülse (16) spielfrei bzw. im wesentlichen spielfrei umgibt.

2. Verschlußeinrichtung nach Anspruch 1, **dadurch gekennzeichnet, daß** zwischen der rückseitigen Stirnfläche (40) der Führungshülse (16) und dem Befestigungsabschnitt (34) ein ringförmiger Einstich (42) vorgesehen ist.

3. Verschlußeinrichtung nach Anspruch 1 oder 2, wobei der Verschlußzapfen (4) als Hohlzapfen ausgebildet ist, **dadurch gekennzeichnet, daß** der Schaftabschnitt (18) jedenfalls im Bereich des Scherspalts (S) als Vollschaft ausgebildet ist.

4. Verschlußeinrichtung nach Anspruch 1, **dadurch gekennzeichnet, daß** der Befestigungsabschnitt (34) in einer Ebene (E) senkrecht zu der Achse (A) der Führungshülse (16) radial nach außen abgewinkelt ist und vollflächig in der senkrecht zu der Achse (A) der Führungshülse (16) liegenden Ebene (E) an der flachen Unterlegscheibe (36) anliegt.

5. Verschlußeinrichtung nach Anspruch 1 oder 4, **dadurch gekennzeichnet, daß** die Unterlegscheibe (36) an ihrer rückseitigen Innenkante mit einem Radius (R) versehen ist.

6. Verschlußeinrichtung nach einem der Ansprüche 1 oder 5, **dadurch gekennzeichnet, daß** die rückseitige Fläche des nach außen abgewinkelten Befestigungsabschnitts (34) mit der rückseitigen Stirnfläche (40) der Führungshülse (16) fluchtet oder im wesentlichen fluchtet.

7. Verschlußeinrichtung nach einem der Ansprüche 1 bis 3, **dadurch gekennzeichnet**, da**ß** der Befestigungsabschnitt (34) um einen Winkel von weniger als 90° in einer Ansenkung (56) in dem die Führungshülse (16) umgebenden Rand der Rückseite (38) des ersten Bauteils (2) nach außen umgebördelt ist.

8. Verschlußeinrichtung nach einem der Ansprüche 1 bis 7, **dadurch gekennzeichnet, daß** der Befestigungsabschnitt (34) eine Wandstärke zwischen 0,1 und 0,3 mm, vorzugsweise von etwa 0,2 mm, hat.

9. Verschlußeinrichtung nach einem der Ansprüche 1 bis 8, **dadurch gekennzeichnet, daß** die Unterlegscheibe (36) eine Materialstärke (D) zwischen 0,2 und 0,5 mm, vorzugsweise von etwa 0,35 mm, hat.

10. Verschlußeinrichtung nach einem der Ansprüche 1 bis 9, **dadurch gekennzeichnet, daß** der Kopfabschitt (10) des Verschlußzapfens (4) und/oder der Kopfabschnitt (32) der Führungshülse (16) als außen konischer Senkkopf ausgebildet sind/ist.

11. Verschlußeinrichtung nach Anspruch 10, **dadurch gekennzeichnet, daß** der Konuswinkel (K) des Senkkopfes des Verschlußzapfens (4) und/oder der Führungshülse (16) zwischen 90 und 110°, vorzugsweise bei etwa 100°, liegt.

12. Verschlußeinrichtung nach einem der Ansprüche 1 bis 11, **dadurch gekennzeichnet, daß** der Verschlußzapfen (4) an seiner Umfangsfläche eine dem Kopfabschnitt (10) zugewandte Anschlagfläche (26) aufweist, welche zum Verhindern des vollständigen Herausziehens des Verschlußzapfens (4) aus der Öffnung (12) der Führungshülse (16) mit einem Sicherungsring (28) zusammenwirkt, welcher in einer zu der Öffnung (12) der Führungshülse (16) hin offenen ringnutartigen Aussparung (30) angeordnet ist.

13. Verschlußeinrichtung nach Anspruch 12, **dadurch gekennzeichnet, daß** der Sicherungsring radial nach innen derart vorgespannt ist, daß er beim axialen Verschieben des Verschlußzapfens (4) in der Führungshülse (16) über die gesamte Länge des Schaftabschnitts (18) seine Vorspannung behält.

14. Verschlußeinrichtung nach Anspruch 12 oder 13, **dadurch gekennzeichnet, daß** der Verschlußzapfen (4) und die Führungshülse (16) als vormontierte Baueinheit ausgebildet und diese als solche vor dem Umbördeln des Befestigungsabschnitts (34) in die Öffnung (14) des ersten Bauteils (2) einsetzbar ist.

## Claims

1. Connecting device for connecting two components (2, 3) for example each plate-like in areas, with a connecting peg (4) which can be captively secured where required on the first component (2) and with a receiver element (6) which can be arranged on the back of the second component (3), in which the connecting peg (4) has a head section (10) formed to rest on the front side (8) of the first component (2) and a shaft section (18) which can be guided through an opening (12) of a guide sleeve (16) arranged in an opening (14) of the first component (2), which shaft section has a thread (24) co-operating with a counter-thread (20) of a connecting section (22) of the receiving element (6), in which the guide sleeve (16) at the end allocated to the head section (10) of the connecting peg (4) has a radially expanded head section (32) and at the end facing away from the head section (10) of the connecting peg (4) has a collar-like fixing section (34) which can be expanded radially and which is bent outwards all round, **characterised in that** the guide sleeve (16) surrounds play-free or essentially play-free the shaft section (18) of the connecting peg (4) in the area of the shear gap (S) between the first component (2) and the second component (3), that the fixing section (34) is bent outwards onto a washer (36) lying on the edge of the back (38) of the first component (2) surrounding the guide sleeve (16), and that the washer (36) is designed as a flat ring disc essentially rectangular in cross-section and surrounds the guide sleeve (16) play-free or essentially play-free.

2. Connecting device according to claim 1, **characterised in that** between the rear face (14) of the guide sleeve (16) and the fixing section (34) is provided an annular recess (42).

3. Connecting device according to claim 1 or 2, where the connecting peg (4) is formed as a hollow peg, **characterised in that** the shaft section (18) is also designed as a solid shaft in any case in the area of the shear gap (S).

4. Connecting device according to claim 1, **characterised in that** the fixing section (34) is angled radially outwards in a plane (E) perpendicular to axis (A) of the guide sleeve (16) and lies with its full surface on the flat washer (36) in the plane (E) lying perpendicular to axis (A) of the guide sleeve (16).

5. Connecting element according to claim 1 or 4, **characterised in that** the washer (36) has on its rear inner edge a radius (R).

6. Connecting device according to any of claims 1 or 5, **characterised in that** the rear face of the outwards angled fixing section (34) aligns or essentially aligns with the rear face (40) of the guide sleeve (16).

7. Connecting device according to any of claims 1 to 3, **characterised in that** the fixing section (34) is flanged outward by an angle of less than 90° in a sunken area (56) in the edge of the rear (38) of the first component (2) surrounding the guide sleeve (16).

8. Connecting device according to any of claims 1 to 7, **characterised in that** the fixing section (34) has a wall thickness between 0.1 and 0.3 mm, preferably around 0.2 mm.

9. Connecting device according to any of claims 1 to 8, **characterised in that** the washer (36) has a material thickness (D) between 0.2 and 0.5 mm, preferably around 0.35 mm.

10. Connecting device according to any of claims 1 to 9, **characterised in that** the head section (10) of the connecting peg (4) and/or the head section (34) of the guide sleeve (16) is/are formed as an outwardly conical countersink head.

11. Connecting device according to claim 10, **characterised in that** the cone angle (κ) of the countersink head of the connecting peg (4) and/or the guide sleeve (16) lies between 90 and 110°, preferably around 100°.

12. Connecting device according to any of claims 1 to 11, **characterised in that** the connecting peg (4) on its peripheral surface has a contact surface (26) facing the head section (10) which, to prevent complete withdrawal of the connecting peg (4) from the opening (12) of the guide sleeve (16), cooperates with a locking ring (28) which is arranged in an annular groove-like recess (30) open towards the opening (12) of the guide sleeve (16).

13. Connecting device according to claim 12, **characterised in that** the locking ring is pretensioned radially inwards such that it retains its pretension on axial movement of the connecting peg (4) in the guide sleeve (16) over the entire length of the shaft section (18).

14. Connecting device according to any of claims 12 or 13, **characterised in that** the connecting peg (4) and the guide sleeve (16) are formed as a preassembled unit and this can be inserted in the opening (14) of the first component (2) before the fixing section (34) is flanged.

## Revendications

1. Organe de verrouillage pour relier deux éléments de construction (2, 3) chacun ayant par exemple au moins une zone en forme de plaque, avec un tenon de verrouillage (4) pouvant être relié au premier élément de construction (2) le cas échéant de façon à ce qu'il ne puisse pas être perdu et un élément de réception (6) pouvant être placé sur la face arrière du second élément de construction (3), dans lequel organe le tenon de verrouillage (4) est muni d'une partie de tête (10) pour l'appui sur la face avant (8) du premier élément de construction (2) et un corps (18) pouvant être passé à travers une ouverture (12) d'un manchon de guidage (16) placé dans une ouverture (14) du premier élément de construction (2), ledit corps présentant un filetage (24) coopérant avec un filetage correspondant (20) d'une zone de connexion (22) de l'élément de réception (6), dans lequel organe le manchon de guidage (16) est muni à l'extrémité associée à la partie de tête (10) du tenon de verrouillage (4) d'une section de tête (32) élargie radialement et à l'extrémité opposée à la partie de tête (10) du tenon de verrouillage (4) d'une section de fixation (34) en forme de collerette pouvant s'élargir radialement laquelle est repliée vers l'extérieur sur son pourtour, **caractérisé en ce que** le manchon de guidage (16) enserre sans jeu ou pratiquement sans jeu le corps (18) du tenon de verrouillage (4) au niveau de l'espace de cisaillement (S) situé entre le premier élément de construction (2) et le deuxième élément de construction (3), **en ce que** la section de fixation (34) est repliée vers l'extérieur sur une rondelle (36) attenante au bord de la face arrière (38) du premier élément de construction (2) entourant le manchon de guidage (16) et **en ce que** la rondelle (36) a la forme d'une rondelle annulaire plate de section sensiblement rectangulaire et qu'elle enserre le manchon de guidage (16) sans jeu ou sensiblement sans jeu.

2. Organe de verrouillage selon la revendication 1, **caractérisé en ce qu**'une piqûre (42) annulaire est réalisée entre la face frontale (40) du manchon de guidage (16) et la section de fixation (34).

3. Organe de verrouillage selon la revendication 1 ou 2, dans lequel le tenon de verrouillage (4) a la forme d'un tenon creux, **caractérisé en ce que le** corps (18) a la forme d'un corps plein en tout cas dans de domaine de l'espace de cisaillement (S).

4. Organe de verrouillage selon la revendication 1, **caractérisé en ce que** la section de fixation (34) est repliée dans un plan (E) perpendiculaire à l'axe (A) du manchon de guidage (16) de façon radiale vers l'extérieur et qu'elle est attenante sur toute sa surface à la rondelle (36) plate dans le plan (E) perpendiculaire à l'axe (A) du manchon de guidage (16).

5. Organe de verrouillage selon la revendication 1 ou 4, **caractérisé en ce que** la rondelle (36) est munie sur son arête intérieure arrière d'un rayon (R).

6. Organe de verrouillage selon l'une des revendications 1 ou 5, **caractérisé en ce que** la surface arrière de la section de fixation (34) repliée vers l'extérieur est alignée ou pratiquement alignée avec la face frontale (40) du manchon de guidage (16).

7. Organe de verrouillage selon l'une des revendications 1 à 3, **caractérisé en ce que** la section de fixation (34) est rabattue vers l'extérieur d'un angle de moins de 90° dans une fraisure (56) pratiquée sur le bord de la face arrière (38) du premier élément de construction (2) enserrant le manchon de guidage (16).

8. Organe de verrouillage selon l'une des revendications 1 à 7, **caractérisé en ce que** la section de fixation (34) a une épaisseur de paroi comprise entre 0,1 et 0,3 mm, de préférence d'environ 0,2 mm.

9. Organe de verrouillage selon l'une des revendications 1 à 8, **caractérisé en ce que** la rondelle (36) a une épaisseur de matériau comprise entre 0,2 et 0,5 mm, de préférence d'environ 0,35 mm.

10. Organe de verrouillage selon l'une des revendications 1 à 9, **caractérisé en ce que** la partie de tête (10) du tenon de verrouillage (4) et / ou la section de tête (32) du manchon de guidage (16) ont / a à l'extérieur la forme d'une tête encastrable conique.

11. Organe de verrouillage selon la revendication 10, **caractérisé en ce que** l'angle du cône (k) de la tête du tenon de verrouillage (4) et / ou du manchon de guidage (16) est compris entre 90 et 110°, de préférence d'environ 100°.

12. Organe de verrouillage selon l'une des revendications 1 à 11, **caractérisé en ce que** le tenon de verrouillage (4) possède sur sa surface périphérique une surface d'arrêt (26) dirigée vers la partie de tête (10) qui coopère en vue d'empêcher l'extraction complète du tenon de verrouillage (4) de l'ouverture (12) du manchon de guidage (16) avec une rondelle de sûreté (28) qui est disposée dans un évidement (30) en forme de gorge annulaire s'ouvrant vers l'ouverture (12) du manchon de guidage (16).

13. Organe de verrouillage selon la revendication 12, **caractérisé en ce que** la rondelle de sûreté est précontrainte de façon radiale vers l'intérieur de telle sorte qu'elle conserve sa précontrainte sur toute la longueur du corps (18) en cas de déplacement axial du tenon de verrouillage (4) dans le manchon de guidage (16).

14. Organe de verrouillage selon la revendication 12 ou 13, **caractérisé en ce que** le tenon de verrouillage (4) et le manchon de guidage (16) sont formés comme un assemblage prémonté qui peut être inséré tel quel dans l'ouverture (14) du premier élément de construction (2) avant de rabattre la section de fixation (34).
